# EUROPÄISCHE PATENTSCHRIFT

(11) **EP 3 126 153 B1**
(45) Veröffentlichungstag und Bekanntmachung des Hinweises auf die Patenterteilung: **31.01.2018**
(21) Anmeldenummer: 15722439.5
(22) Anmeldetag: 31.03.2015
(51) Int. Cl.: B42D 25/00

(54) **SICHERHEITSELEMENT MIT EINEM LINSENRASTERBILD**
SECURITY ELEMENT HAVING A LENTICULAR IMAGE
ÉLÉMENT DE SÉCURITÉ MUNI D'UNE IMAGE LENTICULAIRE

(30) Priorität: 31.03.2014 DE 102014004700
(43) Veröffentlichungstag der Anmeldung: 08.02.2017
(73) Patentinhaber: Giesecke+Devrient Currency Technology GmbH, 81677 München (DE)
(72) Erfinder: FUHSE, Christian, 83624 Otterfing (DE); RAHM, Michael, 83646 Bad Tölz (DE); GREGAREK, André, 81671 München (DE)
(86) Internationale Anmeldenummer: PCT/EP2015/000699
(87) Internationale Veröffentlichungsnummer: WO 2015/149939

(56) Entgegenhaltungen:
- WO-A1-2012/084211
- DE-A1-102012 007 747

## Beschreibung

Die Erfindung betrifft ein Sicherheitselement zur Absicherung von Sicherheitspapieren, Wertdokumenten und anderen Datenträgern, mit einem Linsenrasterbild, das aus unterschiedlichen Betrachtungsrichtungen zumindest zwei unterschiedliche Erscheinungsbilder zeigt. Das Linsenrasterbild enthält ein Linsenraster aus einer Mehrzahl von Mikrolinsen und eine von dem Linsenraster beabstandet angeordnete lasersensitive Motivschicht, und die lasersensitive Motivschicht weist in zwei oder mehr Motivschicht-Teilbereichen unterschiedliche, durch Einwirkung von Laserstrahlung eingebrachte Kennzeichnungen auf, die bei Betrachtung der Motivschicht mit dem Linsenraster die zumindest zwei unterschiedlichen Erscheinungsbilder erzeugen. Die Erfindung betrifft auch ein Verfahren zum Herstellen eines solchen Sicherheitselements und einen mit einem derartigen Sicherheitselement ausgestatteten Datenträger.

Datenträger, wie Wert- oder Ausweisdokumente, aber auch andere Wertgegenstände, wie etwa Markenartikel, werden zur Absicherung oft mit Sicherheitselementen versehen, die eine Überprüfung der Echtheit des Datenträgers gestatten und die zugleich als Schutz vor unerlaubter Reproduktion dienen.

Eine besondere Rolle bei der Echtheitsabsicherung spielen Sicherheitselemente mit betrachtungswinkelabhängigen Effekten, da diese selbst mit modernsten Kopiergeräten nicht reproduziert werden können. Die Sicherheitselemente werden dabei mit optisch variablen Elementen ausgestattet, die dem Betrachter unter unterschiedlichen Betrachtungswinkeln einen unterschiedlichen Bildeindruck vermitteln und beispielsweise je nach Betrachtungswinkel einen anderen Farb- oder Helligkeitseindruck und/ oder ein anderes graphisches Motiv zeigen.

In diesem Zusammenhang ist es bekannt, die Datenträger zur Absicherung mit lasergravierten Kippbildern zu versehen. Dabei werden zwei oder mehr verschiedene Kennzeichnungen, beispielsweise eine Seriennummer und ein Ablaufdatum, unter unterschiedlichen Winkeln durch eine Anordnung zylindrischer Linsen in den Datenträger lasergraviert. Die Laserstrahlung erzeugt dabei eine lokale Schwärzung des Kartenkörpers, die die eingravierten Kennzeichnungen visuell sichtbar macht. Bei der Betrachtung ist je nach Blickwinkel nur die jeweils aus dieser Richtung eingravierte Kennzeichnung sichtbar, so dass durch eine Verkippung der Karte senkrecht zur Achse der Zylinderlinsen ein optisch variabler Kippeffekt entsteht.

Neben Kippbildern sind im Stand der Technik auch andere Sicherheitselemente bekannt, die einem Betrachter richtungsabhängig unterschiedliche Darstellungen dadurch darbieten, dass entsprechende Mikrobildelemente mit Hilfe von Mikrolinsen vergrößert werden, beispielsweise sogenannte Moiré-Vergrößerungsanordnungen und andere mikrooptische Darstellungsanordnungen.

Bei all diesen Sicherheitselementen ist die Strukturierung der Mikrobilder technisch oft anspruchsvoller als die Strukturierung der Linsen, da für die Mikrobilder eine wesentlich höhere Auflösung benötigt wird, zumal unter jeder Linse die Bildinformationen für mindestens zwei Ansichten bereitgestellt werden müssen. Weiterhin müssen die Rasterweiten der Linsen und Mikrobilder sehr genau zueinander passen, da andernfalls beispielsweise bei Kippbildern mehrere Ansichten gleichzeitig sichtbar werden oder bei Moire-Vergrößerungsanordnungen Bildverzerrungen auftreten können.

Es ist bekannt, Mikrobilder mittels Druckverfahren, Prägeverfahren oder per Einbelichtung der Bilder durch die Mikrolinsen mittels eines Lasers zu erzeugen. Dabei wird ausgenutzt, dass ein einfallender Laserstrahl durch die Mikrolinsen fokussiert wird, wodurch sich einerseits die benötigte hohe Auflösung erreichen lässt und andererseits die eingeschriebene Information später auch aus derjenigen Richtung sichtbar ist, aus der sie mit dem Laserstrahl einbelichtet wurde.

Möchte man eine solche Einbelichtung per Laser in industriellem Maßstab, insbesondere auf einer Folienbahn in einem Rolle-zu-Rolle-Prozess, umsetzen, so müssen mit sehr leistungsstarken Lasern sehr schnell sehr viele Mikrobilder einbelichtet werden. Der Laserstrahl darf dabei nur an den Stellen auf die Folie mit den Linsen treffen, an denen in der erzeugten Darstellung später das Bild erzeugt, also beispielsweise eine Metallschicht ablatiert sein soll. Zu diesem Zweck kann der Laserstrahl entsprechend über die Linsenfolie gescannt werden, so dass nur der gewünschte Motivbereich beaufschlagt wird. Alternativ kann der Motivbereich mit einer Maske definiert werden, die bereichsweise die Belichtung der darunter liegenden Linsen verhindert.

Beide Verfahren sind in der Praxis allerdings recht aufwendig. Geeignete Scaneinrichtungen sind teuer und erreichen oft nicht die in einer industriellen Fertigungslinie benötigten Geschwindigkeiten. Eine Maske sollte sich in einem Rolle-zu-Rolle-Prozess bevorzugt mit der Geschwindigkeit der Folienbahn bewegen, zudem ist für jede Ansicht eine eigene Maske nötig, so dass die Maske in der Praxis nicht einfach auf die Folienbahn gedruckt werden kann. Alternativ muss für jede Ansicht ein eigener Druckschritt durchgeführt werden, wobei nach Laserbelichtung aus der entsprechenden Richtung die Druckmaske entfernt werden muss.

Das Dokument DE 10 2012 007 747 A1 offenbart ein Sicherheitselement nach dem Oberbegriff des Anspruchs 1. Ausgehend davon liegt der Erfindung die Aufgabe zugrunde, ein Sicherheitselemerit der eingangs genannten Art anzugeben, bei dem die Kennzeichnungen in einfacher Weise durch Laserbeaufschlagung in die Motivschicht eingebracht werden können.

Diese Aufgabe wird durch die Merkmale der unabhängigen Ansprüche gelöst. Weiterbildungen der Erfindung sind Gegenstand der Unteransprüche.

Gemäß der Erfindung ist bei einem gattungsgemäßen Sicherheitselement vorgesehen, dass
- das Linsenraster in zwei oder mehr Linsenraster-Teilbereiche unterteilt ist, in denen die Mikrolinsen jeweils unterschiedlich brechende Linsenflächenformen aufweisen, wobei
- die unterschiedlichen Linsenraster-Teilbereiche deckungsgleich mit den unterschiedlichen Motivschicht-Teilbereichen sind und die Kennzeichnungen der Motivschicht-Teilbereiche durch Laserbeaufschlagung der Linsenraster-Teilbereiche erzeugt sind.

Die Erfindung beruht dabei auf dem Gedanken, die gewünschten Kennzeichnungen der Motivschicht durch die Verwendung von Mikrolinsen mit unterschiedlichen Formen der Linsenflächen bereits im Linsenraster zu kodieren, so dass bei einer großflächigen Laserbeaufschlagung des Linsenrasters aus den gewünschten Betrachtungsrichtungen die gewünschten Kennzeichnungen in der Motivschicht erzeugt werden, ohne dass eine Maske oder ein Abrastern der Motivschicht mit einem feinen Laserstrahl erforderlich wäre.

Bei herkömmlichen Gestaltungen darf der Laserstrahl beim Abscannen der Linsenfolie höchstens so groß wie die kleinste zu erzeugende Struktur in der Motivschicht sein. Dagegen kann die Laserbeaufschlagung im Rahmen der vorliegenden Erfindung großflächig erfolgen und gleichzeitig mehrere, in der Regel mehrere zehn oder sogar mehrere hundert Mikrolinsen erfassen. Das Linsenraster kann beispielsweise mit einem groben Laserstrahl überstrichen werden, wobei keine Passerung beachtet werden muss, oder das Linsenraster kann sogar vollflächig mit Laserstrahlung beaufschlagt werden. Die Erzeugung der Kennzeichnungen kann daher deutlich schneller erfolgen, und auch der apparative Aufwand ist geringer, da auch auf eine genaue Positionierung des Laserstrahls verzichtet werden kann.

Die Anforderung, dass das Linsenrasterbild zumindest zwei unterschiedliche Erscheinungsbilder zeigt, wird mit Vorteil dadurch verwirklicht, dass das Linsenrasterbild zumindest zwei unterschiedliche gegenständliche Ansichten zeigt, zwischen denen durch Kippen des Sicherheitselements hin und her gewechselt werden kann. Es ist jedoch auch möglich, dass das Linsenrasterbild nur eine einzige gegenständliche Darstellung enthält, die aus einigen Beträchtungsrichtungen sichtbar ist, aus anderen Betrachtungsrichtungen dagegen nicht. Auch dadurch werden zwei unterschiedliche Erscheinungsbilder definiert, nämlich das erste Erscheinungsbild, in dem die gegenständliche Darstellung vorhanden ist, und das zweite Erscheinungsbild, in dem die gegenständliche Darstellung fehlt.

In einer vorteilhaften Ausgestaltung sind die Mikrolinsen in zwei oder mehr Linsensegmente unterteilt, wobei innerhalb eines Linsenraster-Teilbereichs die Linsenflächen der Linsensegmente gleich, aber unabhängig voneinander fokussierend beziehungsweise nicht-fokussierend ausgebildet sind. Mit anderen Worten sind in einem bestimmten Linsenraster-Teilbereich die Linsenflächen der Linsensegmente jeweils für alle Mikrolinsen gleich ausgebildet, wobei allerdings für jedes Linsensegment unabhängig von den anderen Linsensegmenten festgelegt werden kann, ob es in diesem Linsenraster-Teilbereich fokussierend oder nicht-fokussierend ausgebildet ist.

Mit Vorteil ist die Linsenfläche in den fokussierenden Linsensegmenten konvex und in den nicht-fokussierenden Segmenten konkav ausgebildet, wobei mit besonderem Vorteil der Krümmungsradius in den fokussierenden und den nicht-fokussierenden Segmenten betragsmäßig gleich ist. Grundsätzlich können die nicht-fokussierenden Linsensegmente allerdings auch flach ausgebildet sein. Eine weitere Möglichkeit der Gestaltung der nicht-fokussierenden Segmente besteht darin, eine konvexe und daher grundsätzlich fokussierende Gestaltung mit einer stark streuenden Überstruktur zu versehen, durch die das einfallende Licht so stark in verschiedene Richtungen gestreut wird, dass die fokussierende Wirkung der konvexen Linsenfläche aufgehoben wird. Die stark streuende Überstruktur kann beispielsweise durch geprägte Rauigkeiten oder Unregelmäßigkeiten mit Abmessungen größer als die Wellenlänge sichtbaren Lichts, beispielsweise mit Abmessungen von einigen Mikrometern gebildet sein. Auch bei anderen Formen der Linsenoberfläche kann eine nicht-fokussierende Wirkung durch solche Überstrukturen erreicht oder weiter verstärkt werden.

Die Mikrolinsen können eine kreisförmige oder polygonal begrenzte Basisfläche aufweisen, oder durch langgestreckte Zylinderlinsen (Stablinsen) gebildet sein. Auch die Ausbildung der Mikrolinsen als Fresnellinsen ist möglich. Die Mikrolinsen können in einem ein- oder zweidimensionalen Raster angeordnet sein.

In bevorzugten Ausgestaltungen ist das Linsenraster aus einer Mehrzahl paralleler Stablinsen gebildet. Bei einer vorteilhaften Gestaltung sind die Stablinsen jeweils in zwei oder mehr, sich in Längsrichtung erstreckende Linsensegmente unterteilt, in welchen die Linsenflächen innerhalb eines Linsenraster-Teilbereichs gleich, aber unabhängig voneinander fokussierend beziehungsweise nicht-fokussierend, insbesondere strahlaufweitend ausgebildet sind.

Die Stablinsen können auch mit Vorteil in genau zwei, sich in Längsrichtung erstreckende linke und rechte Linsensegmente unterteilt sein, in welchen die Linsenflächen innerhalb eines Linsenraster-Teilbereichs gleich, aber unabhängig voneinander fokussierend beziehungsweise nicht-fokussierend, insbesondere strahlaufweitend ausgebildet sind, wobei
- es zumindest einen Linsenraster-Teilbereich gibt, in dem das linke Linsensegment der Stablinsen fokussierend und das rechte Linsensegment der Stablinsen nicht-fokussierend ausgebildet ist, und
- es zumindest einen Linsenraster-Teilbereich gibt, in dem das linke Linsensegment der Stablinsen nicht-fokussierend und das rechte Linsensegment der Stablinsen fokussierend ausgebildet ist.

Vorteilhaft gibt es zusätzlich zumindest einen Linsenraster-Teilbereich, in dem das linke und das rechte Linsensegment der Stablinsen fokussierend ausgebildet sind, und/ oder zumindest einen Linsenraster-Teilbereich, in dem das linke und das rechte Linsensegment der Stablinsen nicht-fokussierend ausgebildet sind.

In manchen Gestaltungen kann es vorteilhaft sein, wenn die Fokuspunkte verschiedener fokussierender Linsensegmente derselben Mikrolinsen in der Motivebene gegeneinander versetzt sind. Dabei kann durch geeignete Abstimmung von Versetzungsabstand und Einfallsrichtung der Laserstrahlung von den fokussierenden Linsensegmenten ein besonders großer Anteil der einfallenden Strahlung in den Fokus gelenkt werden. Entsprechend trägt bei den nicht-fokussierenden Linsensegmenten ein besonders großer Anteil der einfallenden Strahlung nicht zur Modifikation bei. Auf diese Weise wird die Auswahl einer passenden Laserleistung für die selektive Modifikation vereinfacht und es können besonders kontrastreiche Darstellungen erzeugt werden. Der Versetzungsabstand kann in weitem Rahmen gewählt werden, es ist lediglich darauf zu achten, dass der Versatz der Fokuspunkte nicht dazu führt, dass bei Betrachtung von links bzw. rechts dieselben Stellen unterhalb der Linsen im Fokus liegen.

Die Erfindung enthält auch ein Verfahren zur Herstellung eines Sicherheitselements der genannten Art mit einem Linsenrasterbild, das aus vorgegebenen unterschiedlichen Betrachtungsrichtungen zumindest zwei unterschiedliche Erscheinungsbilder zeigt, wobei bei dem Verfahren
- ein Linsenraster bestehend aus einer Mehrzahl von Mikrolinsen erzeugt wird, welches in zwei oder mehr Linsenraster-Teilbereiche unterteilt ist, in denen die Mikrolinsen jeweils mit unterschiedlich brechenden Linsenflächenformen erzeugt werden,
- das Linsenraster beabstandet über einer lasersensitiven Motivschicht angeordnet wird, und
- das Linsenraster aus den vorgegebenen unterschiedlichen Betrachtungsrichtungen jeweils großflächig mit Laserstrahlung beaufschlagt wird, um in der lasersensitiven Motivschicht zwei oder mehr, zu den unterschiedlichen Linsenraster-Teilbereichen deckungsgleiche Motivschicht-Teilbereiche mit unterschiedlichen, durch die Einwirkung der Laserstrahlung eingebrachten Kennzeichnungen zu erzeugen, die bei Betrachtung der Motivschicht mit dem Linsenraster die zumindest zwei unterschiedlichen Erscheinungsbilder erzeugen.

Bei einer vorteilhaften Verfahrensführung wird das Linsenraster aus einer Mehrzahl paralleler Stablinsen gebildet, wobei besonders bevorzugt die Stablinsen jeweils in zwei oder mehr, sich in Längsrichtung erstreckende Linsensegmente unterteilt werden, und die Linsenflächen der Linsensegmente innerhalb eines Linsenraster-Teilbereichs gleich, aber unabhängig voneinander fokussierend beziehungsweise nicht-fokussierend, insbesondere strahlaufweitend ausgebildet werden.

Die Erfindung umfasst auch einen Datenträger, insbesondere ein Wertdokument, ein Sicherheitspapier, eine Ausweiskarte, einen Markenartikel oder dergleichen, mit einem Sicherheitselement der beschriebenen Art.

Weitere Ausführungsbeispiele sowie Vorteile der Erfindung werden nachfolgend anhand der Figuren erläutert, bei deren Darstellung auf eine maßstabs- und proportionsgetreue Wiedergabe verzichtet wurde, um die Anschaulichkeit zu erhöhen.

Es zeigen:
- Fig.1: in schematischer Darstellung eine Banknote mit einem erfindungsgemäßen Sicherheitselement, das ein Kippbild mit zwei unterschiedlichen Erscheinungsbildern enthält,
- Fig. 2: schematisch ein erfindungsgemäßes Sicherheitselement im Querschnitt zur Erläuterung des grundsätzlichen Vorgehens bei der Erzeugung von Kennzeichnungen mittels Laserbeaufschlagung,
- Fig. 3: im Querschnitt einen Ausschnitt eines Sicherheitselements nach einem Ausführungsbeispiel der Erfindung, wobei (a) und (b) die Wirkung einer Laserbeaufschlagung von links bzw. rechts auf die Motivschicht illustrieren,
- Fig. 4: schematisch vier Linsentypen eines Linsenrasters mit unterschiedlichen Linsenflächenformen und die zugehörigen Modifikationen der Motivschicht,
- Fig. 5: eine Aufsicht auf das Linsenraster des Sicherheitselements der Fig. 1,
- Fig. 6: in (a) und (b) eine Aufsicht nur auf die Motivschicht des Sicherheitselements der Fig. 1 nach zwei Zwischenschritten bei der Herstellung des Sicherheitselements,
- Fig. 7: schematisch die Konstruktion einer spitzen Linse mit zwei in der Motivschicht gegeneinander verschobenen Fokuspunkten, und
- Fig. 8: einen Teilbereich eines erfindungsgemäßen Sicherheitselements mit einem Linsenraster mit spitzen Linsen nach Fig. 7.

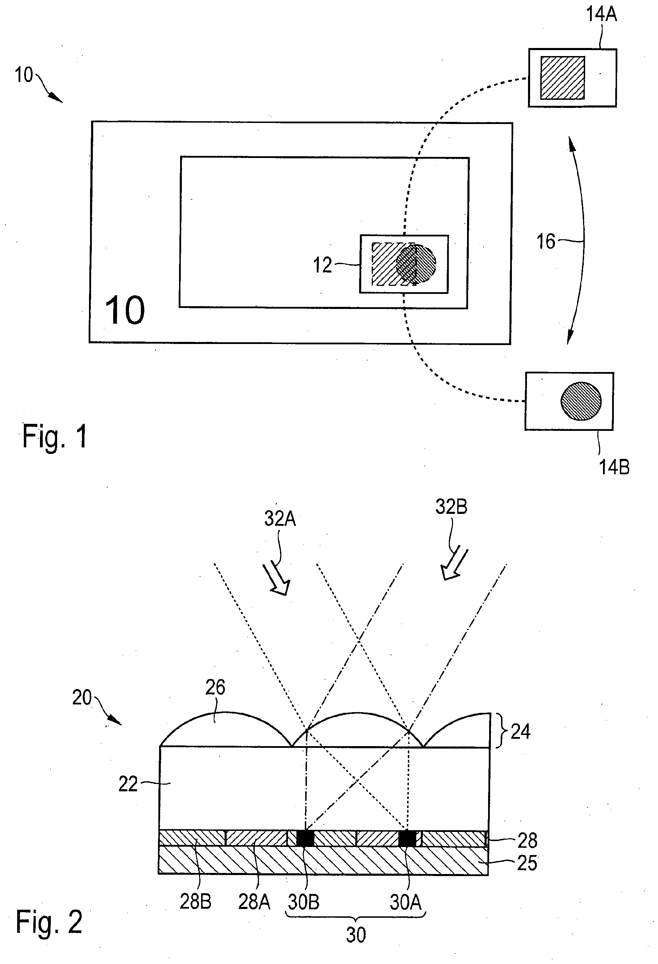

Die Erfindung wird nun am Beispiel von Sicherheitselementen für Banknoten und andere Wertdokumente erläutert. Figur 1 zeigt dazu eine schematische Darstellung einer Banknote 10, die mit einem erfindungsgemäßen Sicherheitselement 12 in Form eines aufgeklebten Transferelements versehen ist. Das Sicherheitselement 12 stellt im Ausführungsbeispiel ein Kippbild dar, das je nach Betrachtungsrichtung eines von zwei unterschiedlichen Erscheinungsbildern 14A, 14B zeigt.

Die Erfindung ist allerdings nicht in irgendeiner Weise auf die zur Illustration verwendeten Transferelemente bei Banknoten beschränkt, sondern kann beispielsweise auch bei Sicherheitsfäden, breiten Sicherheitsstreifen oder bei Abdeckfolien eingesetzt werden, die über einem opaken Bereich, einem Fensterbereich oder einer durchgehenden Öffnung eines Dokuments angeordnet sind.

Die Erscheinungsbilder sind im Ausführungsbeispiel zur Illustration durch ein Quadrat 14A bzw. einen Kreis 14B gebildet, stellen aber in der Praxis zumeist komplexere Motive, beispielsweise die Denomination der Banknote, geometrische Muster, Portraits, Codierungen, Nummerierungen, architektonische, technische oder Naturmotive dar. Beim Kippen 16 der Banknote 10 oder einer entsprechenden Änderung der Betrachtungsrichtung wechselt das Erscheinungsbild des Sicherheitselements 12 zwischen den beiden Erscheinungsbildern 14A,14B hin und her.

Während Linsenrasterbilder mit Kippbildern als solche bekannt sind, stellt die vorliegende Erfindung ein besonders gestaltetes Linsenrasterbild bereit, bei dem die Kennzeichnungen, die bei Betrachtung die gewünschten Erscheinungsbilder 14A, 14B erzeugen, in besonders einfacher Weise durch Laserbeaufschlagung in die Motivschicht des Linsenrasterbilds eingebracht werden. Insbesondere ist zur Einbelichtung mittels Laser weder eine Maske noch ein feines Abrastern der Motivschicht mit einem scharf fokussierten oder fein fokussierten Laserstrahl nötig.

Zum Verständnis der Erfindung wird mit Bezug auf Fig. 2 zunächst das grundsätzliche Vorgehen bei der Erzeugung von Kennzeichnungen mittels Laserbeaufschlagung erläutert. Die Figur zeigt schematisch ein Sicherheitselement 20 im Querschnitt, wobei, wie auch in den nachfolgenden Figuren, nur die für die Erläuterung des Grundprinzips erforderlichen Teile des Aufbaus dargestellt sind. Das Sicherheitselement 20 enthält einen Träger 22 in Form einer transparenten Kunststofffolie, beispielsweise einer etwa 20 µm dicken Polyethylenterephthalat(PET)-Folie. Der Träger 22 weist gegenüberliegende erste und zweite Hauptflächen auf, wobei die erste Hauptfläche mit einem Linsenraster 24 aus einer Mehrzahl von im Wesentlichen zylinderförmigen Stablinsen 26 versehen ist.

Die Dicke des Trägers 22 und die Krümmung der fokussierenden Linsenflächen der Stablinsen 26 sind dabei so aufeinander abgestimmt, dass die Brennweite der Stablinsen 26 im Wesentlichen der Dicke des Trägers 22 entspricht. Die auf der zweiten, gegenüberliegenden Hauptfläche des Trägers 22 angeordnete lasersensitive Motivschicht 28 liegt dann in der Fokusebene der Stablinsen 26. Das Sicherheitselement 20 enthält typischerweise weitere Schichten 25, wie etwa Schutz-, Abdeck- oder zusätzliche Funktionsschichten, die für die vorliegende Erfindung jedoch nicht wesentlich sind und daher nicht näher beschrieben werden.

Bei der Einbelichtung der Kennzeichnungen 30 wird nun ausgenutzt, dass ein einfallender Laserstrahl 32A, 32B durch die Stablinsen 26 fokussiert wird und dadurch in der Fokusebene eine lokale Modifikation 30A, 30B der lasersensitiven Motivschicht erzeugen kann. Diese kann beispielsweise in der lokalen Ablation einer dünnen Metallschicht oder einer Färbung, insbesondere einer Schwärzung eines lasersensitiven Materials bestehen.

Bei der Erzeugung eines Kippbilds mit zwei Ansichten 14A, 14B werden die Stablinsen 26 von zwei verschiedenen Richtungen her mit Laserstrahlung 32A, 32B beaufschlagt. Ein in der Darstellung der Fig. 2 von links her einfallender Laserstrahl 32A erzeugt dann eine lokale Modifikation 30A im rechten Teil 28A des unterhalb der Stablinsen liegenden Motivschichtbereichs. Entsprechend erzeugt ein in der Darstellung der Fig. 2 von rechts her einfallender Laserstrahl 32B eine lokale Modifikation 30B im linken Teil 28B des unterhalb der Stablinsen liegenden Motivschichtbereichs. Die Gesamtheit der Modifikationen 30A bzw. 30B bilden die Kennzeichnungen 30 der Motivschicht 28, die bei Betrachtung mit dem Linsenraster aus den entsprechenden Betrachtungsrichtungen die beiden unterschiedlichen Erscheinungsbilder 14A (Gesamtheit der Modifikationen 30A) und 14B (Gesamtheit der Modifikationen 30B) erzeugen.

Durch diese Vorgehensweise wird einerseits eine sehr hohe Auflösung der zu erzeugenden Kennzeichnungen erreicht, anderseits ist durch die Umkehrbarkeit des Strahlengangs sichergestellt, dass die eingeschriebene Information bei späterer Betrachtung jeweils aus derselben Richtung sichtbar ist, aus der sie mit dem Laserstrahl 32A, 32B einbelichtet wurde. Um die gewünschten Ansichten 14A, 14B zu erzeugen, muss allerdings auch sichergestellt werden, dass die fokussierte Laserstrahlung jeweils nur die zu modifizierenden Bereiche der Motivschicht 28 trifft. Dies wird im Stand der Technik entweder dadurch erreicht, dass die Linsen 26 mit einem schmalen Laserstrahl in Form der zu erzeugenden Kennzeichnungen abgerastert werden, oder dass eine Maske in Form der zu erzeugenden Kennzeichnungen verwendet wird, die bereichsweise eine Belichtung der darunter liegenden Linsen und damit der Motivschicht verhindert.

Die Erfindung stellt hier einen anderen Weg bereit, bei dem das Linsenraster zur Erzeugung der Kennzeichnungen großflächig und ohne Verwendung einer Maske mit Laserstrahlung beaufschlagt werden kann. Dabei werden insbesondere asymmetrische Stablinsen eingesetzt, deren Linsenfläche nur aus bestimmten Richtungen einfallende Laserstrahlung auf die Motivschichtebene fokussiert.

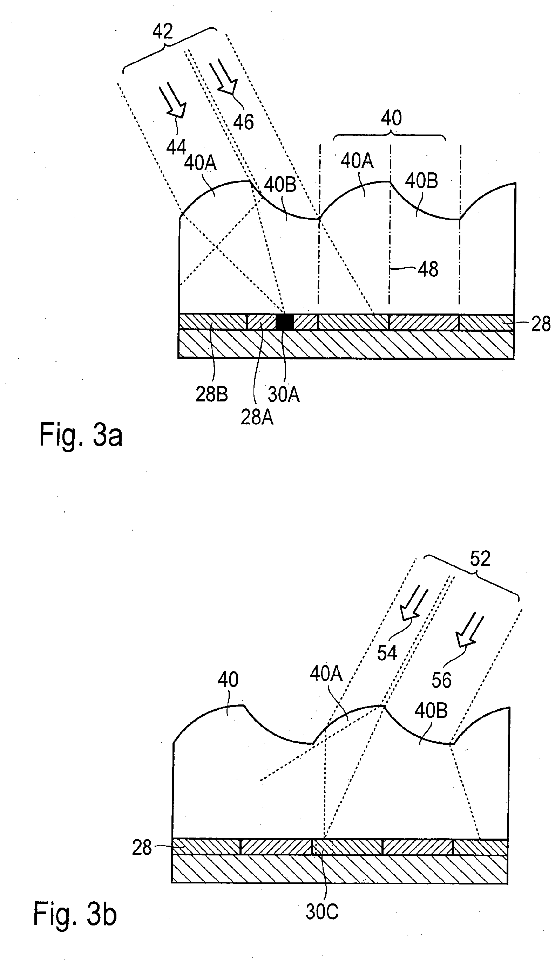

Zur näheren Erklärung zeigt Fig. 3(a) zunächst im Querschnitt einen Ausschnitt eines Sicherheitselements mit einem Linsenraster aus Stablinsen 40, die entlang ihrer Mittellinie 48 in zwei gleich große Linsensegmente 40A, 40B unterteilt sind. Die Linsenfläche des Linsensegments 40A ist dabei wie die Stablinsen 26 der Fig. 2 konvex und damit fokussierend ausgebildet, während die Linsenfläche des Linsensegments 40B konkav und damit strahlaufweitend ausgebildet ist.

Ein in der Darstellung der Fig. 3(a) von links her einfallender Laserstrahl 42 wird dann zum größten Teil 44 vom Linsensegment 40A auf die Motivschicht 28 fokussiert und erzeugt aufgrund der hohen Energiedichte eine lokale Modifikation 30A im rechten Teil 28A des unterhalb der Stablinse 40 liegenden Motivschichtbereichs. Ein kleinerer Teil 46 des einfallenden Laserstrahls 42 wird vom Linsensegment 40B zerstreut und trägt wegen der dadurch geringen Energiedichte nicht zur Modifikation der Motivschicht 28 bei.

Wegen der Asymmetrie der Stablinsen 40 ist die Wirkung eines von rechts her einfallenden Laserstrahls 52 nicht spiegelsymmetrisch. Von einem in der Darstellung der Fig. 3(b) von rechts her einfallenden Laserstrahl 52 trifft nur ein kleiner Teil 54 auf das fokussierende Linsensegment 40A, während der überwiegende Teil 56 der einfallenden Strahlung von dem strahlaufweitenden Linsensegment 40B zerstreut wird.

Da die Leistungsdichte im Fokusbereich 30C bei Laserbeaufschlagung von rechts (Fig. 3(b)) somit geringer ist als im Fokusbereich 30A der Laserbeaufschlagung von links (Fig. 3(a)), kann durch geeignete Einstellung der Laserleistung erreicht werden, dass die Modifikationsschwelle der Motivschicht 28 nur bei Beaufschlagung von links überschritten wird, während bei Beaufschlagung von rechts die Leistungsdichte im Fokus 30C der Linsensegmente 40A unterhalb der Modifikationsschwelle der Motivschicht 28 bleibt, so dass bei Beaufschlagung von rechts durch die Linsen 40 keine Information in die Motivschicht 28 eingeschrieben wird.

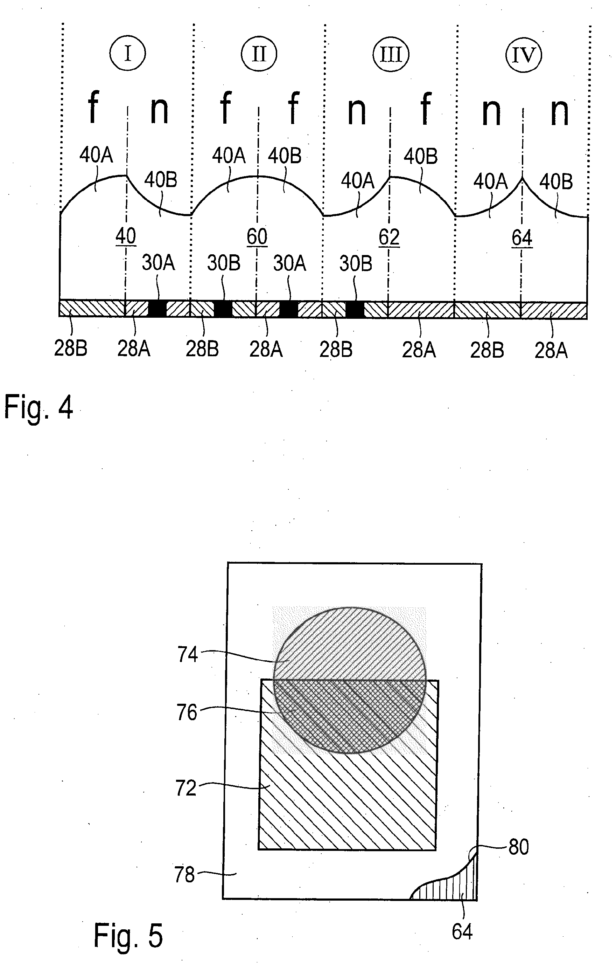

Wie in Fig. 4 nochmals schematisch dargestellt werden mit Stablinsen 40 der in Fig. 3 gezeigten Art trotz Laserbeaufschlagung von links und von rechts nur die rechten Bereiche 28A mit lokalen Modifikationen 30A versehen. Zu diesem Zweck ist das Linsensegment 40A fokussierend (f) ausgebildet, während die Linsenfläche des Linsensegments 40B nicht-fokussierende (n), hier sogar strahlaufweitende Wirkung hat. Linsen mit dieser Linsenflächenform werden nachfolgend als Linsentyp I bezeichnet.

Als Linsentyp II werden herkömmliche Stablinsen 60 bezeichnet, bei denen beiden Linsensegmente 40A, 40B fokussierend (f) ausgebildet sind. Mit Stablinsen vom Typ II werden bei Laserbeaufschlagung von links und von rechts sowohl die rechten Bereiche 28A also auch die linken Bereiche 28B mit lokalen Modifikationen 30A bzw. 30B versehen, wie bereits in Zusammenhang mit Fig. 2 erläutert.

Stablinsen 62 vom Linsentyp III sind spiegelbildlich zu den Stablinsen 40 vom Typ I ausgebildet, das heißt, das Linsensegment 40A ist nicht-fokussierend (n) ausgebildet, während die Linsenfläche des Linsensegments 40B fokussierende (f) Wirkung hat. Bei diesen Linsen werden trotz Laserbeaufschlagung von links und von rechts nur die linken Bereiche 28B mit lokalen Modifikationen 30B versehen.

Schließlich sind die Stablinsen 64 vom Linsentyp IV aus zwei nicht-fokussierenden (n) Linsensegmenten 40A, 40B zusammengesetzt. Trotz Laserbeaufschlagung von links und von rechts werden bei diesen Linsen keine lokalen Modifikationen in der Motivschicht 28 erzeugt.

Mit diesen vier Linsentypen kann das Linsenraster des Sicherheitselements 12 nun so gestaltet werden, dass die gewünschten Kennzeichnungen jeweils durch eine vollflächige Laserbeaufschlagung von links und von rechts einbelichtet werden können. Mit Bezug auf die Aufsicht auf das Linsenraster 70 der Fig. 5, dessen Orientierung gegenüber der Darstellung der Fig.1 um 90° gedreht ist, sind im Linsenraster-Teilbereich 72 (weite Schraffur) Stablinsen vom Typ I vorgesehen, im Linsenraster-Teilbereich 74 (enge Schraffur) Stablinsen vom Typ III, im Linsenraster-Teilbereich 76 (Kreuzschraffur) Stablinsen vom Typ II und im Linsenraster-Teilbereich 78 (keine Schraffur) Stablinsen vom Typ IV. Zur Illustration ist im Bereich 80 im rechten unteren Eck des Sicherheitselements 12 die Orientierung der Stablinsen 64 des Teilbereichs 78 eingezeichnet. Die Stablinsen 40, 60 und 62 der anderen Linsenraster-Teilbereiche weisen dieselbe Orientierung auf und unterscheiden sich nur durch die Form der Linsenfläche (ff, fn oder nf anstatt nn) von den Stablinsen 64.

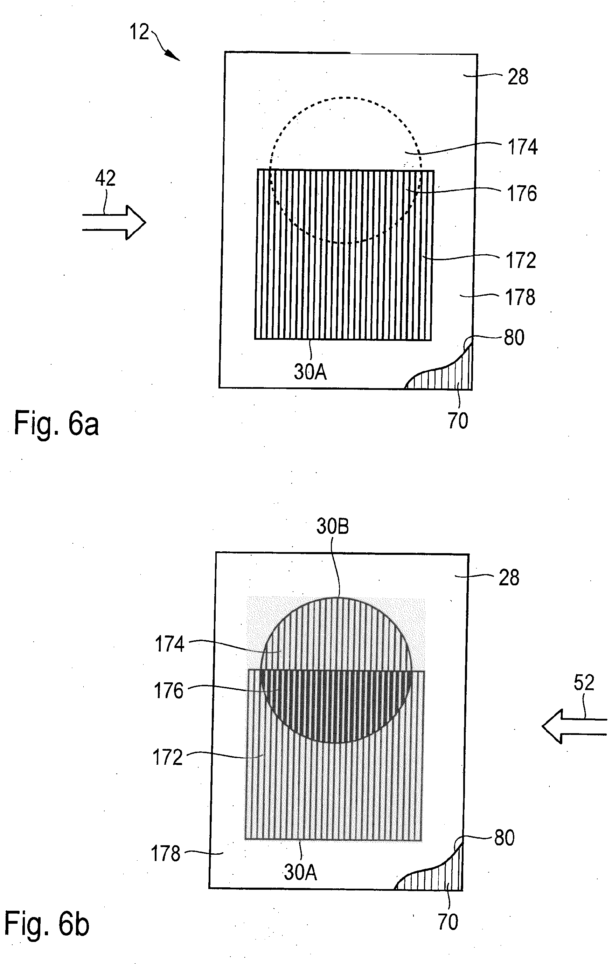

Mit Bezug auf Fig. 6(a) wird das Sicherheitselement 12 nun zunächst von links vollflächig mit Laserstrahlung 42 beaufschlagt. Wie oben erläutert werden dabei in den Linsenraster-Teilbereichen 72 und 76, die Stablinsen vom Typ I bzw. Typ II enthalten, lokale Modifikationen 30A in den deckungsgleich darunterliegenden Motivschicht-Teilbereichen 172,176 der lasersensitiven Motivschicht 28 erzeugt.

Dagegen werden in den Linsenraster-Teilbereichen 74 und 78, die Stablinsen vom Typ III bzw. Typ IV enthalten, trotz der Laserbeaufschlagung keine lokale Modifikationen in den deckungsgleich darunterliegenden Motivschicht-Teilbereichen 174,178 der Motivschicht 28 erzeugt, da dort wegen der strahlaufweitenden Wirkung der Linsensegmente 40A die Modifikationsschwelle der Motivschicht 28 nicht überschritten wird.

Figur 6(a) zeigt eine Aufsicht nur auf die Motivschicht 28 nach diesem ersten Schritt der Laserbeaufschlagung von links. Zusätzlich ist im Bereich 80 wieder die Orientierung der Stablinsen in dem über der Motivschicht 28 angeordneten Linsenraster 70 angedeutet.

Aufgrund der Form und Anordnung der Stablinsen 40, 60 in den Teilbereichen 72 und 76 wurden im ersten Schritt in die Motivschicht 28 gerade im Bereich des Quadrats (Motivschicht-Teilbereiche 172 und 176) linienförmige Modifikationen 30A einbelichtet, die bei der späteren Betrachtung durch das Linsenraster 70 das erste Erscheinungsbild 14A des Quadrats erzeugen, wie in Fig. 1 dargestellt.

Anschließend wird das Sicherheitselement 12 von rechts vollflächig mit Laserstrahlung 52 beaufschlagt, wie in Fig. 6(b) illustriert. Dabei werden in den Linsenraster-Teilbereichen 74 und 76, die Stablinsen vom Typ III bzw. Typ II enthalten, lokale Modifikationen 30B in den deckungsgleich darunterliegenden Motivschicht-Teilbereichen 174, 176 der lasersensitiven Motivschicht 28 erzeugt. Dagegen werden in den Linsenraster-Teilbereichen 72 und 78, die Stablinsen vom Typ I bzw. Typ IV enthalten, trotz der Laserbeaufschlagung keine lokale Modifikationen in den deckungsgleich darunterliegenden Motivschicht-Teilbereichen 172,178 der lasersensitiven Motivschicht 28 erzeugt, da dort wegen der strahlaufweitenden Wirkung der Linsensegmente 40B die Modifikationsschwelle der Motivschicht 28 nicht überschritten wird.

Figur 6(b) zeigt eine Aufsicht nur auf die Motivschicht 28 nach diesem zweiten Schritt der Laserbeaufschlagung von rechts. Aufgrund der Form und Anordnung der Stablinsen 62, 60 in den Teilbereichen 74 und 76 wurden im zweiten Schritt in die Motivschicht 28 gerade im Bereich des Kreises (Motivschicht-Teilbereiche 174 und 176) linienförmige Modifikationen 30B einbelichtet, die bei der späteren Betrachtung durch das Linsenraster 70 das zweite Erscheinungsbild 14B des Kreises erzeugen, wie in Fig. 1 dargestellt.

Da die Motivschicht-Teilbereiche, in denen bei Laserbeaufschlagung von links bzw. von rechts lokale Modifikationen 30A, 30B erzeugt werden, vollständig durch die Form der Stablinsen 40, 60, 62, 64 im Linsenraster 70 bestimmt sind, ist zur Einbelichtung der gewünschten Kennzeichnungen weder eine Maske noch ein feines Abrastern der Motivschicht erforderlich. Vielmehr können selbst komplexe Kippbilder auf einfache Weise in die Motivschicht 28 einbelichtet werden.

Die beiden beschriebenen Beaufschlagungsschritte können selbstverständlich auch gleichzeitig erfolgen, beispielsweise durch geeignete Aufspaltung eines Laserstrahls oder durch Einsatz zweier Laserquellen. Auch wenn das im Ausführungsbeispiel beschriebene Kippbild zwischen zwei gegenständlichen Darstellungen (Quadrat 14A und Kreis 14B) wechselt, kann ein Kippbild grundsätzlich auch nur eine einzige gegenständliche Darstellung enthalten, die aus einer bestimmten Betrachtungsrichtung sichtbar ist, aus anderen Betrachtungsrichtungen dagegen nicht.

Insgesamt ist das Linsenraster 70 des Ausführungsbeispiels in vier Linsenraster-Teilbereiche 72, 74, 76, 78 unterteilt, in denen die Stablinsen 40, 60, 62, 64 jeweils unterschiedlich brechende Linsenflächenformen (fn, ff, nf bzw. nn) aufweisen, wie in Fig. 4 illustriert. Die Linsenraster-Teilbereiche 72, 74, 76, 78 sind weiter deckungsgleich mit den Motivschicht-Teilbereichen 172,174,176, 178. Wie geschildert, werden die Kennzeichnungen 30A, 30B der Motivschicht-Teilbereiche durch Laserbeaufschlagung der Linsenraster-Teilbereiche erzeugt.

Während das Prinzip der Erfindung vorstehend für ein Kippbild mit zwei gegenständlichen Darstellungen erläutert wurde, können die Linsenrasterbilder auch nur eine oder mehr als zwei gegenständliche Darstellungen aus unterschiedlichen Betrachtungsrichtungen zeigen. Beispielsweise können die Stablinsen zur Erzeugung von drei (oder vier) unterschiedlichen Erscheinungsbildern in drei (oder vier) sich in Längsrichtung erstreckende Linsensegmente unterteilt sein, wobei die Linsenflächen der Linsensegmente in den unterschiedlichen Linsenraster-Teilbereichen jeweils unabhängig voneinander fokussierend oder nicht-fokussierend ausgebildet sind.

Allerdings steht bei einer größeren Anzahl an Erscheinungsbildern pro Erscheinungsbild ein kleinerer Anteil der Linsenoberfläche zur Ausbildung als fokussierend bzw. nicht-fokussierend zur Verfügung. Dadurch nimmt bei der Belichtung die Lichtintensität im Fokus ab, so dass ein geringerer optischer Kontrast erzeugt wird und die jeweils anderen Erscheinungsbilder stärker durchscheinen können. Auch wird mit zunehmender Anzahl an Erscheinungsbildern die gezielte Einstellung der Laserintensität in der Fokusebene ober- bzw. unterhalb der Modifikationsschwelle schwieriger. In der Praxis werden daher in der Regel Linsenrasterbilder mit nur zwei, drei oder vier Erscheinungsbildern verwendet, wobei Linsenrasterbilder mit zwei Erscheinungsbildern bevorzugt sind.

Über die oben beschriebenen Linsenformen hinaus können Stablinsen allgemein in k Linsensegmente unterteilt werden, wobei k vorzugsweise 2, 3 oder 4 ist. Die Linsensegmente sind je nach gewünschtem darzustellendem Motiv fokussierend bzw. nicht-foküssierend ausbildet. In fokussierenden Linsensegmenten können die Linsen sphärisch oder auch asphärisch sein. Auch die Ausbildung der Mikrolinsen als Fresnellinsen ist möglich. Fokussierende Bereiche der unterschiedlichen Linsensegmente können jeweils denselben Fokuspunkt haben oder auch zwei oder mehr in der Bildebene gegeneinander verschobene Fokuspunkte haben. Es versteht sich, dass bei Stablinsen der "Fokuspunkt" durch eine Fokuslinie entlang der longitudinalen Stabachse der Linsen gebildet ist. Die Bezeichnung Fokuspunkt bezieht sich dabei auf eine Darstellung der Linsen im Querschnitt senkrecht zur Stabachse.

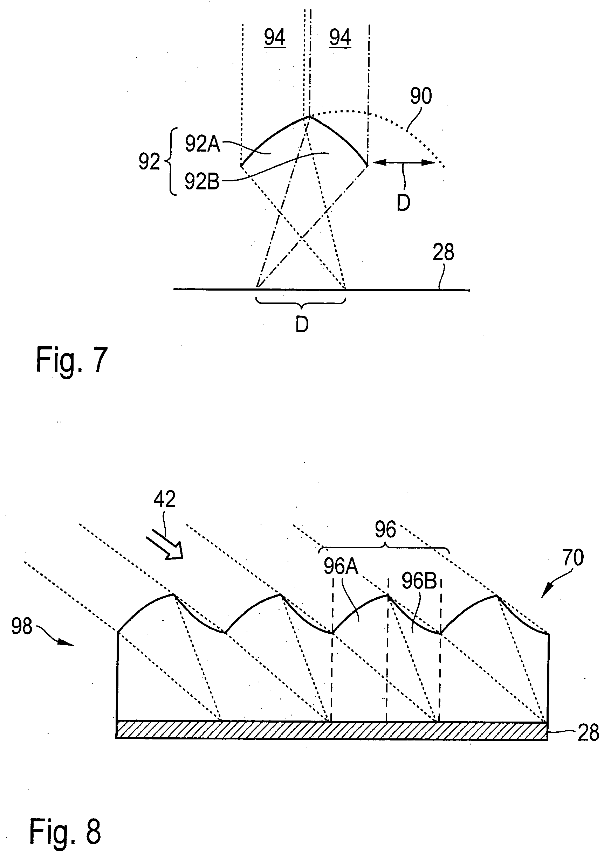

Mit Bezug auf Fig. 7 kann eine vorteilhafte Variante mit unterschiedlichen Fokuspunkten zweier Linsensegmente erhalten werden, wenn man aus einer Stablinse 90 mit einem senkrecht zur Stabachse sphärischen oder asphärischen Querschnitt einen Bereich der Breite D in der Mitte herausnimmt. Auf diese Weise entsteht eine spitze Linse 92, die in ihren beiden Linsensegmenten 92A, 92B einfallende Laserstrahlung 94 auf zwei Fokuspunkte fokussiert, die in der Motivebene 28 einen Abstand D aufweisen.

Solche spitzen Linsen 92 können analog zu der oben beschriebenen Vorgehensweise in vier Ausprägungen (Linsentypen I bis IV mit Linsenflächen fn, ff, nf, nn) eingesetzt werden, um Linsenrasterbilder mit zwei unterschiedlichen Erscheinungsbildern zu erzeugen.

Figur 8 zeigt einen Teilbereich eines Sicherheitselements 98 mit einem solchen Linsenrasterbild, in dem das Linsenraster 70 analog zu der Darstellung der Fig. 3 Stablinsen 96 mit einem linken, fokussierend ausgebildeten Linsensegment 96A und einem rechten, strahlaufweitend ausgebildeten Linsensegment 96B aufweist. Mit spitzen Linsen 96 kann bei geeigneter Wahl der Betrachtungsrichtungen ein besonders großer Teil der einfallenden Laserstrahlung 42 in den Fokus auf der Motivschicht 28 gelenkt werden. Wie aus Fig. 8 ersichtlich, kann bei geeigneter Abstimmung von Abstand D und Einfallsrichtung der Laserstrahlung sogar das gesamte einfallende Licht in den Fokus gelenkt werden. Entsprechend wird bei Laserbeaufschlagung der strahlaufweitenden Linsensegmente 96B von der gegenüberliegenden Seite praktisch die gesamte Laserenergie zerstreut und nicht auf die Motivschicht 28 fokussiert. Dadurch wird die Einstellung einer für die selektive Modifikation geeigneten Laserleistung vereinfacht und es können besonders kontrastreiche Darstellungen erzeugt werden.

In allen Gestaltungen sind die nicht-fokussierenden Linsensegmente bevorzugt betragsmäßig ähnlich gekrümmt bzw. mit gleichen lokalen Steigungen ausgestattet wie die fokussierenden Linsensegmente. Unterschiedlich ist dann nur das Vorzeichen des Krümmungsradius (konkave bzw. konvexe Linsenfläche). Da einfallendes Licht zu einem kleinen Anteil auch von den Linsen reflektiert wird, können unterschiedliche Linsenformen in Reflexion sichtbar werden. Dieser Effekt kann minimiert werden, wenn die Linsenteile einfallendes Licht in möglichst gleiche Richtungen reflektieren, was durch gleiche Steigungen und zumindest dem Betrag nach gleichen Krümmungen der konkaven und konvexen Linsensegmente erreicht werden kann. In anderen, einfacheren Ausführungen können die nicht-fokussierenden Bereiche beispielsweise auch flach ausgebildet sein.

### Bezugszeichenliste

- 10: Banknote
- 12: Sicherheitselement
- 14A, 14B: Erscheinungsbilder
- 16: Kipprichtung
- 20: Sicherheitselement
- 22: Träger
- 24: Linsenraster
- 25: weitere Schichten
- 26: Stablinsen
- 28: lasersensitive Motivschicht
- 28A, 28B: rechter bzw. linker Teil eines Motivschichtbereichs
- 30: Kennzeichnungen
- 30A, 30B: lokale Modifikationen
- 32A, 32B: Laserstrahl
- 40: Stablinsen
- 40A, 40B: Linsensegmente
- 42: Laserstrahl
- 44,46: Teile des Laserstrahls
- 52: Laserstrahl
- 54, 56: Teile des Laserstrahls
- 60, 62, 64: Stablinsen
- 70: Linsenraster
- 72, 74, 76, 78: Linsenraster-Teilbereiche
- 80: Bereich
- 90: Linse
- 92: spitze Linse
- 92A, 92B: Linsensegmente
- 94: Laserstrahlung
- 96: Stablinse
- 96A, 96B: Linsensegmente
- 172, 174, 176, 178: Motivschicht-Teilbereiche

## Patentansprüche

1. Sicherheitselement zur Absicherung von Sicherheitspapieren, Wertdokumenten und anderen Datenträgern, mit einem Linsenrasterbild, das aus unterschiedlichen Betrachtungsrichtungen zumindest zwei unterschiedliche Erscheinungsbilder (14A, 14B) zeigt, wobei
- das Linsenrasterbild ein Linsenraster (70) aus einer Mehrzahl von Mikrolinsen (40, 60, 62, 64) und eine von dem Linsenraster (70) beabstandet angeordnete lasersensitive Motivschicht (28) enthält,
- die lasersensitive Motivschicht (28) in zwei oder mehr Motivschicht-Teilbereichen (172,174,176,178) unterschiedliche, durch Einwirkung von Laserstrahlung eingebrachte Kennzeichnungen (30A, 30B) aufweist, die bei Betrachtung der Motivschicht (28) mit dem Linsenraster (70) die zumindest zwei unterschiedlichen Erscheinungsbilder (14A, 14B) erzeugen,
**dadurch gekennzeichnet, dass**
- das Linsenraster (70) in zwei oder mehr Linsenraster-Teilbereiche (72, 74, 76, 78)unterteilt ist, in denen die Mikrolinsen (40, 60, 62, 64) jeweils unterschiedlich brechende Linsenflächenformen aufweisen, wobei
- die unterschiedlichen Linsenraster-Teilbereiche (72, 74, 76, 78) deckungsgleich mit den unterschiedlichen Motivschicht-Teilbereichen (172,174,176,178) sind und die Kennzeichnungen (30A, 30B) der Motivschicht-Teilbereiche durch Laserbeaufschlagung der Linsenraster-Teilbereiche (72, 74, 76, 78) erzeugt sind.

2. Sicherheitselement nach Anspruch 1, **dadurch gekennzeichnet, dass** die Mikrolinsen in zwei oder mehr Linsensegmente unterteilt sind, in welchen die Linsenflächen innerhalb eines Linsenraster-Teilbereichs gleich, aber unabhängig voneinander fokussierend beziehungsweise nicht-fokussierend ausgebildet sind.

3. Sicherheitselement nach Anspruch 1 oder 2, **dadurch gekennzeichnet, dass** das Linsenraster aus einer Mehrzahl paralleler Stablinsen gebildet ist

4. Sicherheitselement nach Anspruch 3, **dadurch gekennzeichnet, dass** die Stablinsen in zwei oder mehr, sich in Längsrichtung erstreckende Linsensegmente unterteilt sind, in welchen die Linsenflächen innerhalb eines Linsenraster-Teilbereichs gleich, aber unabhängig voneinander fokussierend beziehungsweise nicht-fokussierend, insbesondere strahlaufweitend ausgebildet sind.

5. Sicherheitselement nach Anspruch 3, **dadurch gekennzeichnet, dass** die Stablinsen in genau zwei, sich in Längsrichtung erstreckende linke und rechte Linsensegmente unterteilt sind, in welchen die Linsenflächen innerhalb eines Linsenraster-Teilbereichs gleich, aber unabhängig voneinander fokussierend beziehungsweise nicht-fokussierend, insbesondere strahlaufweitend ausgebildet sind, und dass
- es zumindest einen Linsenraster-Teilbereich gibt, in dem das linke Linsensegment der Stablinsen fokussierend und das rechte Linsensegment der Stablinsen nicht-fokussierend ausgebildet ist, und
- es zumindest einen Linsenraster-Teilbereich gibt, in dem das linke Linsensegment der Stablinsen nicht-fokussierend und das rechte Linsensegment der Stablinsen fokussierend ausgebildet ist.

6. Sicherheitselement nach Anspruch 5, **dadurch gekennzeichnet, dass**
- es zumindest einen Linsenraster-Teilbereich gibt, in dem das linke und das rechte Linsensegment der Stablinsen fokussierend ausgebildet sind, und/ oder
- es zumindest einen Linsenraster-Teilbereich gibt, in dem das linke und das rechte Linsensegment der Stablinsen nicht-fokussierend ausgebildet sind.

7. Sicherheitselement nach wenigstens einem der Ansprüche 1 bis 6, **dadurch gekennzeichnet, dass** die Linsenfläche in den fokussierenden Linsensegmenten konvex und in den nicht-fokussierenden Segmenten konkav ausgebildet ist, insbesondere dass der Krümmungsradius in den fokussierenden und den nicht-fokussierenden Segmenten betragsmäßig gleich ist.

8. Sicherheitselement nach wenigstens einem der Ansprüche 1 bis 7, **dadurch gekennzeichnet, dass** die Linsenfläche in den nicht-fokussierenden Segmenten mit einer streuenden Überstruktur versehen ist, die vorzugsweise durch geprägte Rauigkeiten oder Unregelmäßigkeiten, besonders bevorzugt mit Abmessungen von einigen Mikrometern gebildet ist.

9. Sicherheitselement nach wenigstens einem der Ansprüche 2 bis 8, **dadurch gekennzeichnet, dass** die Fokuspunkte verschiedener fokussierender Linsensegmente derselben Mikrolinsen in der Motivebene gegeneinander versetzt sind.

10. Verfahren zur Herstellung eines Sicherheitselements mit einem Linsenrasterbild, das aus unterschiedlichen Betrachtungsrichtungen zumindest zwei unterschiedliche Erscheinungsbilder (14A, 14B) zeigt, nach einem der Ansprüche 1 bis 9, wobei bei dem Verfahren
- ein Linsenraster (70) bestehend aus einer Mehrzahl von Mikrolinsen (40, 60, 62, 64) erzeugt wird, welches in zwei oder mehr Linsenraster-Teilbereiche (72, 74, 76, 78) unterteilt ist, in denen die Mikrolinsen (40, 60, 62, 64) jeweils mit unterschiedlich brechenden Linsenflächenformen erzeugt werden,
- das Linsenraster (70) beabstandet über einer lasersensitiven Motivschicht (28) angeordnet wird, und
- das Linsenraster (70) aus den vorgegebenen unterschiedlichen Betrachtungsrichtungen jeweils großflächig mit Laserstrahlung beaufschlagt wird, um in der lasersensitiven Motivschicht (28) zwei oder mehr, zu den unterschiedlichen Linsenraster-Teilbereichen (72, 74, 76, 78) deckungsgleiche Motivschicht-Teilbereiche (172,174,176,178) mit unterschiedlichen, durch die Einwirkung der Laserstrahlung eingebrachten Kennzeichnungen (30A, 30B) zu erzeugen, die bei Betrachtung der Motivschicht (28) mit dem Linsenraster (70) die zumindest zwei unterschiedlichen Erscheinungsbilder (14A, 14B) erzeugen.

11. Verfahren nach Anspruch 10, **dadurch gekennzeichnet, dass** das Linsenraster aus einer Mehrzahl paralleler Stablinsen gebildet wird, bevorzugt, dass die Stablinsen jeweils in zwei oder mehr, sich in Längsrichtung erstreckende Linsensegmente unterteilt werden, und die Linsenflächen der Linsensegmente innerhalb eines Linsenraster-Teilbereichs gleich, aber unabhängig voneinander fokussierend beziehungsweise nicht-fokussierend, insbesondere strahlaufweitend ausgebildet werden.

12. Datenträger, insbesondere Wertdokument, Sicherheitspapier, Ausweiskarte oder Markenartikel mit einem Sicherheitselement nach einem der Ansprüche 1 bis 9.

## Claims

1. A security element for securing security papers, value documents and other data carriers, having a lenticular image that, from different viewing directions, displays at least two different appearances (14A, 14B),
- the lenticular image including a lens grid (70) composed of a plurality of microlenses (40, 60, 62, 64) and a laser-sensitive motif layer (28) that is arranged spaced apart from the lens grid (70),
- the laser-sensitive motif layer (28) comprising, in two or more motif layer sub-regions (172,174,176,178), different markings (30A, 30B) that are introduced by the action of laser radiation and that, when the motif layer (28) is viewed with the lens grid (70), produce the at least two different appearances (14A, 14B),
**characterized in that**
- the lens grid (70) is divided into two or more lens grid sub-regions (72, 74, 76, 78) in which the microlenses each comprise differently refractive lens surface forms,
- the different lens grid sub-regions (72, 74, 76, 78) being congruent with the different motif layer sub-regions (172,174,176,178), and the markings (30A, 30B) of the motif layer sub-regions (172,174,176,178) being produced by laser impingement of the lens grid sub-regions (72, 74, 76, 78).

2. The security element according to claim 1, **characterized in that** the microlenses are divided into two or more lens segments in which the lens surfaces within a lens grid sub-region are developed to be identical but, independently of each other, focusing or non-focusing.

3. The security element according to claim 1 or 2, **characterized in that** the lens grid is formed from a plurality of parallel rod lenses.

4. The security element according to claim 3, **characterized in that** the rod lenses are divided into two or more lens segments that extend longitudinally and in which the lens surfaces within a lens grid sub-region are developed to be identical but, independently of each other, focusing or non-focusing, especially beam expanding.

5. The security element according to claim 3, **characterized in that** the rod lenses are divided into exactly two, left and right, lens segments that extend longitudinally and in which the lens surfaces within a lens grid sub-region are developed to be identical but, independently of each other, focusing or non-focusing, especially beam expanding, and **in that**
- there is at least one lens grid sub-region in which the left lens segment of the rod lenses is developed to be focusing and the right lens segment of the rod lenses non-focusing, and
- there is at least one lens grid sub-region in which the left lens segment of the rod lenses is developed to be non-focusing and the right lens segment of the rod lenses focusing.

6. The security element according to claim 5, **characterized in that**
- there is at least one lens grid sub-region in which the left and the right lens segment of the rod lenses are developed to be focusing, and/or
- there is at least one lens grid sub-region in which the left and the right lens segment of the rod lenses are developed to be non-focusing.

7. The security element according to at least one of claims 1 to 6, **characterized in that** the lens surface is developed to be convex in the focusing lens segments and concave in the non-focusing segments, especially in that the radius of curvature in the focusing and the non-focusing segments is identical in terms of absolute value.

8. The security element according to at least one of claims 1 to 7, **characterized in that,** in the non-focusing segments, the lens surface is provided with a scattering superstructure that is preferably formed by embossed roughnesses or irregularities, particularly preferably having dimensions of a few micrometers.

9. The security element according to at least one of claims 2 to 8, **characterized in that** the focal points of different focusing lens segments of the same microlenses are offset from each other in the motif plane.

10. A method for manufacturing a security element, having a lenticular image that, from different viewing directions, displays at least two different appearances (14A, 14B), according to one of claims 1 to 9, and in the method,
- a lens grid (70) consisting of a plurality of microlenses (40, 60, 62, 64) being produced that is divided into two or more lens grid sub-regions (72, 74, 76, 78) in which the microlenses (40, 60, 62, 64) are each produced having differently refractive lens surface forms,
- the lens grid (70) is arranged spaced apart over a laser-sensitive motif layer (28), and
- the lens grid (70) is impinged on in each case in a large area with laser radiation from the specified different viewing directions to produce in the laser-sensitive motif layer (28) two or more motif layer sub-regions (172,174,176,178) that are congruent with the different lens grid sub-regions (72, 74, 76, 78) and that have different markings (30A, 30B) that are introduced by the action of laser radiation and that, when the motif layer (28) is viewed with the lens grid (70), produce the at least two different appearances (14A, 14B).

11. The method according to claim 10, **characterized in that** the lens grid is formed from a plurality of parallel rod lenses, preferably that the rod lenses are each divided into two or more lens segments that extend longitudinally, and the lens surfaces of the lens segments within a lens grid sub-region are developed to be identical but, independently of each other, focusing or non-focusing, especially beam expanding.

12. A data carrier, especially a value document, security paper, identification card or branded article having a security element according to one of claims 1 to 9.

## Revendications

1. Élément de sécurité pour la sécurisation de papiers de sécurité, de documents de valeur et d'autres supports de données, comportant une image lenticulaire qui, à partir de sens d'observation différents, montre au moins deux images apparentes (14A, 14B,)
- l'image lenticulaire contenant un réseau lenticulaire (70) composé d'une pluralité de micro-lentilles (40, 60, 62, 64) et une couche à motif (28) sensible au laser disposée à distance du réseau lenticulaire (70),
- la couche à motif sensible au laser (28) présentant, dans deux sous-zones de couche à motif ou plus (172,174,176,178), différents marquages (30A, 30B) apposés par rayonnement laser qui, en cas d'observation de la couche à motif (28), génèrent avec le réseau lenticulaire (70) les au moins deux images apparentes différentes (14A, 14B),
**caractérisé en ce que**
- le réseau lenticulaire (70) est divisé en deux sous-zones de réseau lenticulaire ou plus (72, 74, 76, 78) dans lesquelles les micro-lentilles (40, 60, 62, 64) présentent respectivement des formes de surface lenticulaire à réfractions différentes,
- les différentes sous-zones de réseau lenticulaire (72, 74, 76, 78) se recouvrant avec les différentes sous-zones de couche à motif (172, 174, 176, 178) et les marquages (30A, 30B) des sous-zones de couche à motif étant créés par sollicitation au laser des sous-zones de réseau lenticulaire (72, 74, 76, 78).

2. Élément de sécurité selon la revendication 1, **caractérisé en ce que** les micro-lentilles sont divisées en deux segments lenticulaires ou plus dans lesquels les surfaces lenticulaires ont une conformation identique à l'intérieur d'une sous-zone de réseau lenticulaire mais sont focalisantes ou non focalisantes indépendamment l'une de l'autre.

3. Élément de sécurité selon la revendication 1 ou 2, **caractérisé en ce que** le réseau lenticulaire est composé d'une pluralité de lentilles cylindriques parallèles.

4. Élément de sécurité selon la revendication 3, **caractérisé en ce que** les lentilles cylindriques sont divisées en deux segments lenticulaires ou plus s'étendant dans le sens longitudinal et dans lesquels les surfaces lenticulaires ont une conformation identique à l'intérieur d'une sous-zone de réseau lenticulaire mais sont focalisantes ou non focalisantes indépendamment l'une de l'autre.

5. Élément de sécurité selon la revendication 3, **caractérisé en ce que** les lentilles cylindriques sont divisées en deux segments lenticulaires gauche et droit s'étendant dans le sens longitudinal et dans lesquels les surfaces lenticulaires ont une conformation identique à l'intérieur d'une sous-zone de réseau lenticulaire mais sont focalisantes ou non focalisantes indépendamment l'une de l'autre, en particulier ont un effet d'élargissement de rayons, et
- dans lequel il y a au moins une sous-zone de réseau lenticulaire dans laquelle le segment lenticulaire gauche des lentilles cylindriques est focalisant et le segment lenticulaire droit des lentilles cylindriques est non focalisant, et
- il y a au moins une sous-zone de réseau lenticulaire dans laquelle le segment lenticulaire gauche des lentilles cylindriques est non focalisant et le segment lenticulaire droit des lentilles cylindriques est focalisant.

6. Élément de sécurité selon la revendication 5, **caractérisé en ce**
- **qu'**il y a au moins une sous-zone de réseau lenticulaire dans laquelle le segment lenticulaire gauche et le segment lenticulaire droit des lentilles cylindriques sont focalisants et/ou
- **qu'**il y a au moins une sous-zone de réseau lenticulaire dans laquelle le segment lenticulaire gauche et le segment lenticulaire droit des lentilles cylindriques sont non focalisants.

7. Élément de sécurité selon au moins une des revendications 1 à 6, **caractérisé en ce que** la surface lenticulaire a une conformation convexe dans les segments lenticulaires focalisants et concave dans les segments non focalisants, en particulier que le rayon de courbure dans les segments focalisants et non focalisants est de même valeur.

8. Élément de sécurité selon au moins une des revendications 1 à 7, **caractérisé en ce que** la surface lenticulaire est pourvue dans les segments non focalisants d'une sur-structure dispersée qui est constituée de préférence par des rugosités ou des irrégularités gaufrées, très préférentiellement ayant des dimensions de quelques micromètres.

9. Élément de sécurité selon au moins une des revendications 2 à 8, **caractérisé en ce que** les points de focus de différents segments lenticulaires focalisants des mêmes micro-lentilles sont décalés les uns des autres dans le plan du motif.

10. Procédé de fabrication d'un élément de sécurité pourvu d'une image lenticulaire, comportant une image lenticulaire qui, à partir de sens d'observation différents, montre au moins deux images apparentes (14A, 14B) selon une des revendications 1 à 9, dans lequel, dans le procédé,
- il est créé un réseau lenticulaire (70) composé d'une pluralité de micro lentilles (40, 60, 62, 64) qui est divisé en deux sous-zones de réseau lenticulaire ou plus (72, 74, 76, 78) dans lesquelles les micro-lentilles (40, 60, 62, 64) sont respectivement réalisées avec des formes de surfaces lenticulaires à réfractions différentes
- le réseau lenticulaire (70) est disposé à distance au-dessus d'une couche à motif sensible au laser (28), et
- le réseau lenticulaire (70) est respectivement sollicité sur une grande surface à partir des sens d'observation différents prédéfinis avec un rayonnement laser afin de de créer dans la couche à motif sensible au laser (28) deux sous-zones de réseau lenticulaire différente (172, 174, 176, 178) ou plus se recouvrant avec les différentes sous-zones de réseau lenticulaire (72, 74, 76, 78) et comportant des marquages différents apposés par action du rayonnement laser (30A, 30B) qui, en cas d'observation de la couche à motif (28), constituent avec le réseau lenticulaire (70) les au moins deux images apparentes différentes (14A, 14B).

11. Procédé selon la revendication 10, **caractérisé en ce que** le réseau lenticulaire est constitué d'une pluralité de lentilles cylindriques parallèles, que les lentilles cylindriques sont préférentiellement divisées en deux segments lenticulaires ou plus s'étendant dans le sens longitudinal et que les surfaces lenticulaires des segments lenticulaires ont une conformation identique à l'intérieur d'une sous-zone de réseau lenticulaire mais sont focalisantes ou non focalisantes indépendamment l'une de l'autre et ont en particulier un effet d'élargissement des rayons.

12. Support de données, en particulier document de valeur, papier de sécurité, carte d'identité ou article de marque comportant un élément de sécurité selon une des revendications 1 à 9.
